Europäisches Patentamt

European Patent Office

Office européen des brevets

(11) Publication number: **0 338 137**
**A1**

## EUROPEAN PATENT APPLICATION

(21) Application number: 88200759.4

(22) Date of filing: 19.04.88

(51) Int. Cl.⁴: **B07B 1/08 , B07B 13/16 , B65G 65/32 , B65D 88/32**

(43) Date of publication of application:
25.10.89 Bulletin 89/43

(84) Designated Contracting States:
AT BE CH DE ES FR GB GR IT LI LU NL SE

(71) Applicant: Machinefabriek A. Wijnveen B.V.
Slijpkruikweg 50 Postbus 212
NL-6710 BE Ede(NL)

(72) Inventor: Wijnoogst,Jacobus Cornelis
Bellestein 167
NL-6714 DR Ede(NL)
Inventor: The other inventor has agreed to
waive his entitlement to designation

(74) Representative: Van Assen, Jan Willem
Bernhard
Octrooibureau van Assen Assenpatent B.V.
Konijnenlaan 22
NL-2243 ER Wassenaar(NL)

(54) Combined rotary sieving and distributing device.

(57) A combined rotating sieve and dividing appara-
tus for separating grit (Ps) from granular material
(Pc) by sieving and particularly for compressed
cattle-fodder pellets and for leading processed-prod-
uct (Pr) to a selected outlet (12a,...,12j) of a number
of individually controlled outlets (12a,...,12j) distrib-
uted around the periphery of the apparatus and each
of which outlets is connected via a transport line to a
separate storage-silo for a processed-product Pr.

Fig.4.

# A DIFFERENTIAL MECHANISM

A combined rotating sieve and distributing apparatus for separating grit from granular material by sieving and particularly for compressed cattle-fodder pellets and for the distribution of each of the processed products to a selected one of a number of individually controlled outlets arranged around the periphery of the apparatus and each of which outlets is connected to a separate storage silo for each processed product.

The invention relates to a rotating sieving apparatus for separating material of granular form into two components by sieving and particularly for separating grit from compressed cattle-fodder pellets and which is provided with a sieve-housing with one or more rotating sieving-surfaces, at least one outlet for the processed product and one or more sieving-surfaces arranged around the periphery of the sieve-housing.

Sieving apparatus of this type is known from Dutch Patent 179.709. This sieving apparatus is particularly used for removing grit freed during transport and storage of compressed cattle-fodder pellets because the grit will not be consumed by the cattle. Rotating distributors for distributing different sorts of processed product to a number of stock-stores such as for example storage silos are known. In these arrangements, a rotatable distributing pipe is selectively connected to a number of uncontrolled and continuously open outlets so that a particular product such as a particular sort of cattle-fodder is led to a particular storage silo. If this particular product still has to be sieved prior to being stored in the silo to remove grit, then a separate sieving apparatus must be fitted above each silo. This means that a complicated and costly construction must be provided which takes up much space. In the case where a sieve must be installed which is followed by the rotating distributor much space is again taken up.

Through this there is a need for a simpler, cheaper and less space occupying combination of a distributing apparatus and a sieving apparatus which simultaneously sieves the product being processed to remove the grit therefrom and then leads the product to the concerned one of the outlets so that the processed-product can be transported to the silo for which it is destined.

The invention satisfies this need inasmuch that a number of individually controlled processed-product outlets are arranged on the outside of the sieve-housing and each of which can be connected to a different transport line for a different processed-product.

A first embodiment of the invention is characterised by the fact that each of the processed-product outlets is made in the form of a continuously open outlet on a fixed sieve-housing whilst the inner sieve-housing is rotatable by a central shaft such that its continuously open outlet can be selectively positioned to coincide with the continuosly open outlet on the outer sieve-housing and maintained temporarily in that position so that the processed product can be led through a particular outlet.

A second embodiment of the invention is characterised by the fact that each of the individually controlled processed-product outlets is made in the form of a separate housing and in which each product outlet-housing has at least one inlet gate which controls the connecting means between the inner side of the sieve-housing and the outlet-housing so that the processed-product can be led through a particular outlet.

The invention is now to be further described with reference to the accompanying drawings showing several embodiments thereof and in which:

Fig. 1 schematically shows a plan view of the apparatus according to the invention and which is installed above a number of storage silos.

Fig. 2 shows a side elevation of the apparatus shown in fig.1.

Fig. 3 is a plan view of the first embodiment on a different scale than that of figs. 1 and 2 of the sieving and distributing apparatus according to the invention.

Fig. 4 is a side elevation of the sieving and distributing apparatus shown in fig. 3.

Fig. 5 shows a partial side-elevation of the second embodiment on a greater scale than the sieving and distributing apparatus according to the invention shown in figs. 1 and 2.

Fig. 6 is a partial plan-view of the sieving and distributing apparatus shown in fig. 5.

Fig. 7 is a partial side-elevation of the sieving and distributing apparatus shown in fig. 6.

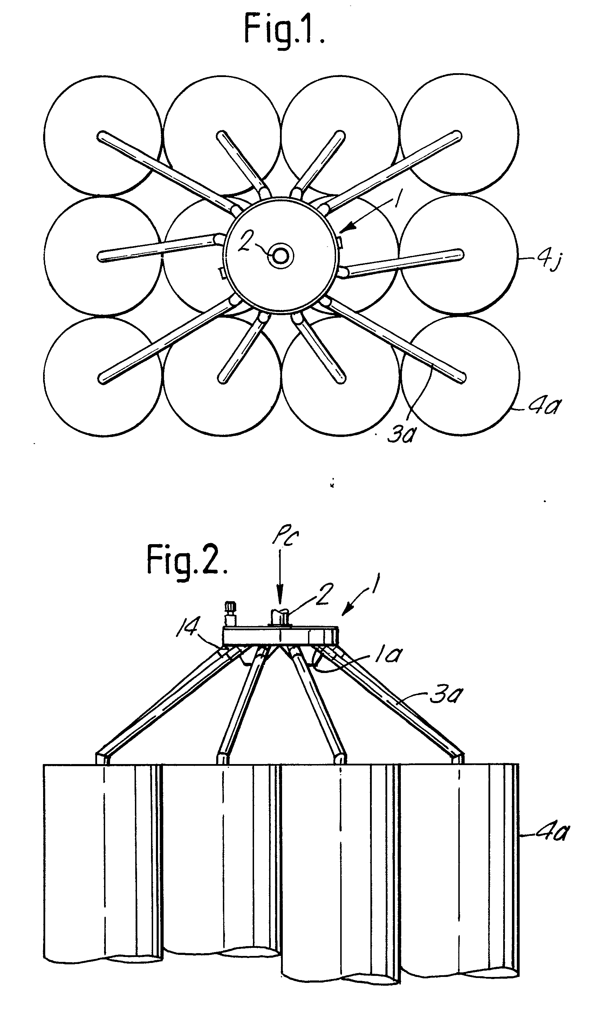

Figs. 1 and 2 shows a general plan view of an application of the sieving and distributing apparatus generally indicated by the reference numeral 1 according to the invention. This sieving and distributing apparatus comprises a central supply pipe 2 for the raw product Pc to be processed and which for example comprises a mixture of compressed cattle-fodder pellets and grit the latter of which is to be removed before the processed-product Pr can be transported to the storage silos 4a,..,4j via one of the outlets 1a,..,1j which are connected to the transport lines 3a,..,3j. Following this, the processed-product Pr is transported away from the storage silos (in a manner not shown) by bulk-transport tanker-vehicles for example to the users such as cattle and poultry farmers.

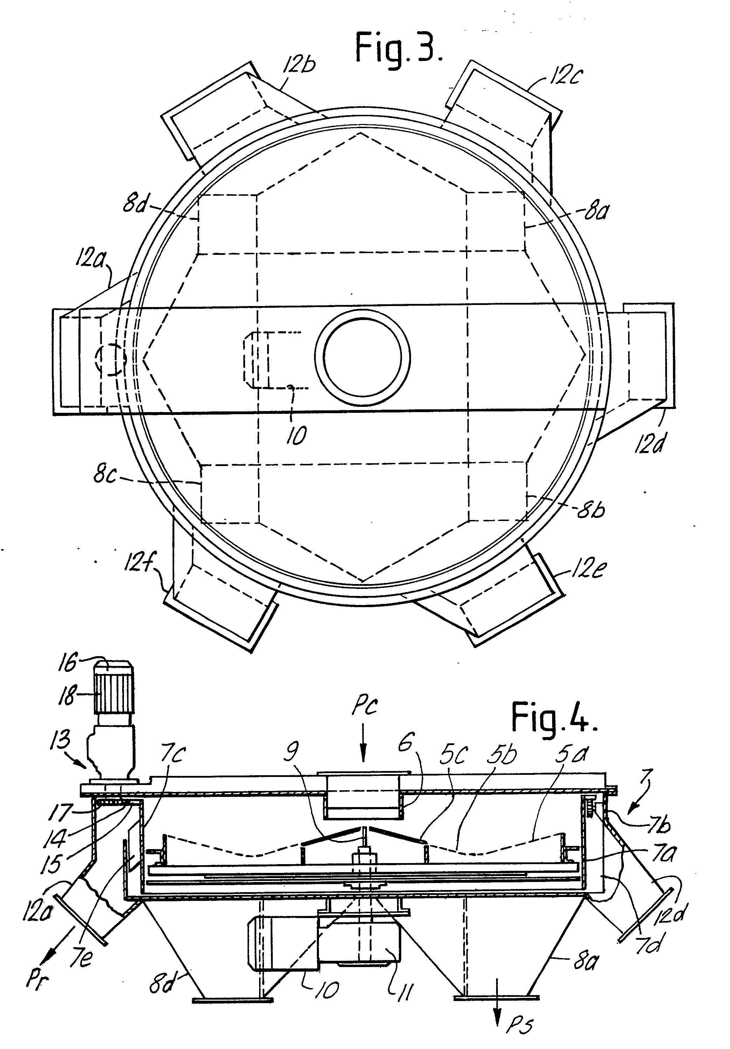

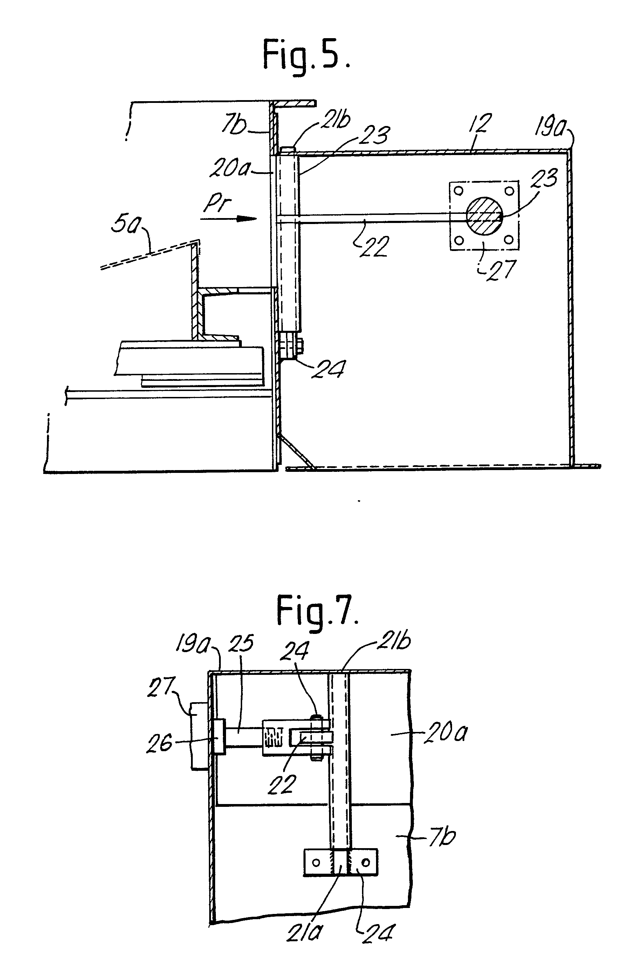

A first embodiment of the invention is shown in figs. 3 and 4 with a rotating sieving-apparatus 1 in which the outer portion of the rotating sieving-surface 5 has a mantle 5a in the form of a hollow truncated-cone the imaginary apex of which points downward. This outer portion 5a connects to a centre portion also in the form of a hollow truncated-cone the imaginary apex of which points upward in this case and which centre portion has an impervious or perforated central distributor 5c for equally distributing the product Pc to be sieved over the sieving-surface 5. A centrally-positioned height-adjustable supply pipe 6 for the product Pc to be sieved is arranged above the central cone-like distributor 5c.

At least one outlet8for the sieved out grit Ps is arranged on the underside of the sieve-housing generally indicated by the reference numeral 7. Preferably, and as shown in figs. 3 and 4, there is a total of four grit outlets 8 a-d these are arranged equispaced at 90 degrees from one another so that adaption to the local conditions of the installation to which the apparatus according to the invention is applied is made possible. The sieving-surface 5 is driven round by the central shaft 9 driven by an electric motor 10 with a right-angle transmission-gearbox 11 mounted under the sieve-housing 7. According to the invention, a number of individually-controlled processed-product outlets 12 are arranged around the outside of the sieve-housing 7 and each of which can be connected to a different transport line 3a,...,3j for a different processed product Pr.

In the first embodiment shown in figs. 3 and 4, each of the product outlets 12 is made in the form of a continuously open outlet 12a,...,12f on a fixed sieve-housing 7b whilst the inner sieve-housing 7a is rotatable by the central main shaft 9. This inner sieve-housing 7a can be rotated to selectively position its continuously open outlet 7c to coincide with a continuously opened outlet 12a,...,12f on the outer sieve-housing 7b and maintained temporarily in that position so that the processed product Pr can be led through a particular outlet 12. In the interests of positioning the outlet opening 7c in the side wall of the inner sieve-housing 7a to coincide with a selected opening 12 in the outer sieve-housing 12,the inner sieve-housing 7a is provided with a driving means generally indicated by the reference numeral 13 and which in the illustrated embodiment comprises a chain 14 which is tensioned around a mainly horizontally-extending peripheral flange 15 on the upper side of the inner sieve-housing 7a. This chain engages around and with a rotatable toothed sprocket wheel 17 which is driven by a motor 18. This motor 18 is preferably electrically-driven but could be hydraulically or pneumatically driven.

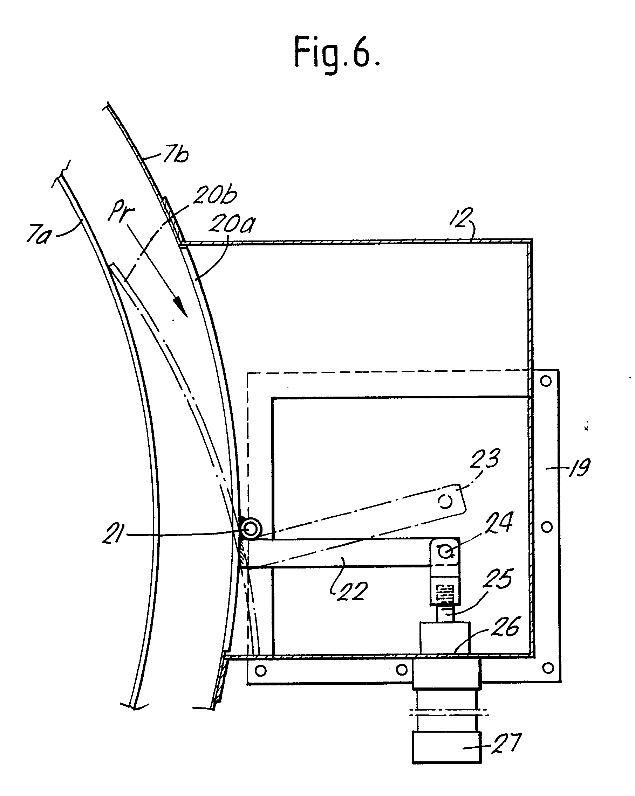

Figs.5 and 6 show show a second embodiment of the apparatus according to the invention. These figs. only shows only one of the individually controlled product outlets 12 but it will be clear that the other outlets 12 are of identical form. Each of these individually-controlled processed-product outlets 12 is also in the form of separate housing 19 which has at least an inlet-gate 20 which controls the connection between the inner side of the sieve-housing 7 and the outlet-housing 19. Through this arrangement, the processed-product Pr can be led through a particular outlet-housing 19. Suitably, the inlet gate 20 can form a part of the outer peripheral-wall 7b of the sieve-housing. This gate 20 is also pivotable about the axis of a vertically arranged hinge-shaft 21 between the closed position, indicated by the full-lines 20a where the connection between the sieve-housing 7 and the outlet-housing 19 is broken, and the open position 20b where this connection is made and as indicated by the chain-lines 20b and through which it is made possible for the processed-product Pr to be discharged through the outlet-housing 19.

The inlet-gate 20 carries an operating arm 22 arranged radially with respect to the sieving-apparatus shaft and of which the outer end 23 is pivotably connected by a hinge 24 with the outer end of the piston-rod 25 of a fluid-operated piston and cylinder assembly 26 of which the cylinder 27 is affixed to a side wall of the product outlet-housing 12.

The vertical hinge-shaft 21 of each inlet-gate 20 is stepped and the shortest lower end 21a of a smaller diameter is pivotably accomodated and supported in a bearing-bush 24 affixed to an outer wall 7b of the sieve-housing 7. The longer upper portion of the shaft 21 with the larger diameter is pivotably accomodated in a bearing-bush 23 affixed to the outer side of the inlet-gate 20. At the position where the rotating sieving-apparatus 1 has a round cylindrical form, the inlet-gate 20 preferably has the same radius R as the sieve-housing 7. In the embodiment illustrated in figs. 3 to 7 the number of outlets 12 equispaced around the peripheral wall 7b of the sieve-housing 7 at regular angular intervals of 60 degrees and the number of product outlets 19 is six. This number can larger or smaller according to the local conditions with respect to the installation to which the combined sieving and distributing apparatus according to the invention will be applied.

## Claims

1. A rotating sieving apparatus for separating material of granular form (Pc) into two components by sieving and particularly for separating grit (Ps) from compressed cattle-fodder pellets and which is provided with a sieve-housing (7) with one or more rotating sieving-surfaces (5), at least one outlet (1) for the processed product and one or more sieving-surfaces arranged around the periphery of the sieve-housing characterised in this that a number of individually controlled processed-product outlets (12) are arranged on the outer side of the sieve-housing (7) each of which can be connected to a different transport line (3) for a different processed-product. (Pr)

2. A rotating sieving apparatus as claimed in claim 1 characterised in this that each of the processed-product outlets (1) is in the form of a continuously open outlet (12) whilst the inner sieve-housing (7a) is rotatable by a central main shaft (9) so that its continuously open outlet opening (7d) on the outer sieve housing (7b) can be selectively positioned to coincide with the continuously open outlet in the outer sieve-housing (7b) and maintained temporarily in that position such that the processed-product (Pr) can be led through a particular outlet (12).

3. A rotating sieving apparatus as claimed in claim 1 or claim 2 characterised in this that the inner sieve-housing (7a) is provided with a driving means (13) for positioning the outlet opening (7c) coincident with an outlet pipe (7e) in the side wall (7a) of the inner sieve-housing with a selected outlet opening (7d) of the outer sieve-housing (7b).

4. A rotating sieving apparatus as claimed in any one of claims 1 to 3 characterised in this that the driving means (13) comprises a chain (14) which is tensioned around a mainly horizontally-extending peripheral-flange (15) on the upper side of the inner sieve-housing (7) and in which the chain (14) engages around and with a rotatable toothed sprocket-wheel (17) driven by a motor (18).

5. A rotating sieving apparatus as claimed in any one of claims 1 to 4 characterised in this that the motor (18) is electrically driven.

6. A rotating sieving apparatus as claimed in any one of claims 1 to 4 characterised in this that the motor (18) is hydraulically driven.

7. A rotating sieving apparatus as claimed in any one of claims 1 to 4 characterised in this that the motor (18) is pneumatically driven.

8. A rotating sieving apparatus as claimed in claim 1 characterised in this that each of the individually-controlled processed-product outlet-housings (12) is in the form of a separate housing (19) and in which each outlet-housing (19) has at least one inlet-gate (20) which controls the opening between the inner side of the sieve-housing (7) and the outlet-housing (19) such that the processed-product (Pr) can be led through a particular outlet (12).

9. A rotating sieving apparatus as claimed in claim 8 characterised in this that the inlet-gate (20) forms part of the outer peripheral wall (7b) of the sieve-housing (7) and is pivotable about the axis of a vertically arranged hinge-shaft 21 between a closed position (20a) in which the connection between the sieve-housing (7) and the outlet-housing (19) is broken and an open position (20b) in which this connection is made.

10. A rotating sieving apparatus as claimed in claim 8 and claim 9 characterised in this that the inlet-gate (20) carries an operating arm (22) arranged radially with respect to the shaft (9) of the sieving apparatus (1) and of which the outer end (23) is connected by a hinge (24) with the outer end of the piston-rod (25) of a fluid operated piston and cylinder assembly (26) of which the cylinder (27) is affixed to the side wall of the product outlet-housing (19).

11. A rotating sieving apparatus as claimed in claim 9 or claim 10 characterisedin this that vertical hinge-shaft (21) of the outlet-gate (20) is stepped and the lower shorter end (21a) of a smaller diameter is pivotably accomodated and supported in a bearing-bush (24) affixed to an outer wall (7b) of the sieve-housing (7) whilst the longer upper portion of the shaft (21) with the larger diameter is pivotably accomodated in a bearing-bush (23) affixed to the outer side of the inlet-gate (20).

12. A rotating sieving apparatus as claimed in any one of claims 8 to 11 in which the sieve-housing has a round cylindrical form and is characterised in this that the inlet-gate (20) has the same radius (R) as the sieve-housing (7).

13. A rotating sieving apparatus as claimed in any one of claims 8 to 12 characterised in this that a number of product outlet-housings (19) are equispaced around the peripheral wall (7b) of the sieve-housing (7) at regular angular intervals.

14. A rotating sieving apparatus as claimed in any one of claims 8 to 13 characterised in this that the number of product outlet-housings (19) is six and that the angular spacing therebetween is 60 degrees.

15. A rotating sieving apparatus as claimed in any one of claims 8 to 14 in which at least one outlet for the sieved-out grit is arranged on the underside of the sieve-housing and characterised in this that the number of grit-outlets(8)is four and that the angular spacing therebetween is 90 degrees.

16. A rotating sieving apparatus as claimed in any one of claims 8 to 15 characterised in this that the outer portion ofthe sieving-surface (5) is in the form of a hollow truncated-cone (5a) with the imaginary apex thereof pointing downward and which outer portion connects to a centre portion (5b) which also has the form of a hollow truncated-cone but with the imaginary apex thereof pointing upward and which has a central distributor (5c) in the centre thereof and in which a centrally-positioned height-adjustable supply pipe (6) for the product (Pc) to be sieved is arranged above the central distributor (5c) of the rotating sieving-surface (5).

# Fig.1.

# Fig.2.

**Fig.3.**

**Fig.4.**

## Fig.5.

## Fig.7.

## Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 723 242 (COOPERATIEVE LANDBOUW AAN- EN VERKOOP COMBINATIE) * Page 5, lines 1-22; figure * & NL-B-179 709 (Cat. D,A) --- | 1 | B 07 B 1/08 B 07 B 13/16 B 65 G 65/32 B 65 D 88/32 |
| A | GB-A- 985 775 (W. BOULTON LTD) * Page 2, lines 26-33; figures 1,2 * --- | 1 | |
| A | US-A-3 842 992 (R. HEROLD) --- | | |
| A | DE-A-1 930 155 (KNAPSACK AG) ----- | | |

TECHNICAL FIELDS SEARCHED (Int. Cl.4)

B 07 B
B 65 G
B 65 D

The present search report has been drawn up for all claims

| Place of search | Date of completion of the search | Examiner |
|---|---|---|
| THE HAGUE | 24-11-1988 | LAVAL J.C.A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)